# EUROPEAN PATENT APPLICATION

(11) **EP 4 586 406 A1**
(43) Date of publication of application: **16.07.2025**
(21) Application number: 23877653.8
(22) Date of filing: 11.10.2023
(51) Int. Cl.: H01Q 1/38, H01Q 1/24, H04M 1/02

(54) **ANTENNA AND ELECTRONIC DEVICE COMPRISING SAME**

(30) Priority: 11.10.2022 KR 20220129942; 24.11.2022 KR 20220159741
(71) Applicant: Samsung Electronics Co., Ltd., Suwon-si, Gyeonggi-do 16677 (KR)
(72) Inventor: KIM, Jongsuk, Suwon-si, Gyeonggi-do 16677 (KR); YUN, Jiyeon, Suwon-si, Gyeonggi-do 16677 (KR); KIM, Gyusub, Suwon-si, Gyeonggi-do 16677 (KR); KIM, Seunghwan, Suwon-si, Gyeonggi-do 16677 (KR)
(74) Representative: HGF
(86) International application number: PCT/KR2023/015599
(87) International publication number: WO 2024/080728

(57) **Abstract**

An electronic device according to various embodiments comprises: at least one housing including a first side surface and a second side surface extending from the first side surface in the vertical direction; a conductor, which is arranged in the housing and extends along the second side surface from the first side surface; a substrate including a ground plane arranged in the inner space of the housing; and a wireless communication circuit which is arranged in the substrate, and which is configured to transmit or receive a wireless signal in a first frequency band through a first point of the conductor, wherein: the first point is positioned at the corner or adjacent to the corner of the conductor; and, in the conductor, a first length of a first radiating portion positioned at one side from the first point can be the same, on the basis of the first frequency band, as a second length of a second radiating portion positioned at the other side.

## Description

### [Technical Field]

Various embodiments of the disclosure relate to an antenna and an electronic device including the same.

### [Background Art]

Electronic devices are becoming slimmer to meet the purchasing needs of consumers as the functional gap between manufacturers is narrowing, and they are being developed to increase the rigidity, strengthen the design aspect, and differentiate the functional elements. As part of this trend, electronic devices are being developed to exhibit superior radiation performance through structural changes in at least one antenna that should be equipped for communication, among their components.

### [Disclosure of Invention]

### [Technical Problem]

An electronic device may include a housing structure (e.g., a housing) that provides a space for accommodating electronic components. The housing structure may include a front cover (e.g., a first plate), a rear cover (e.g., a second plate) facing in an opposite direction to the front cover, and a lateral member (e.g., a lateral frame or a lateral bezel) arranged to surround a space between the front cover and the rear cover. The lateral member may include a support member (e.g., an extension member) that extends at least in part into an internal space of the electronic device. The lateral member may be formed at least in part of a metal (e.g., a conductive member, a conductive portion, or a conductive material) to reinforce the rigidity of the electronic device and/or perform a designated function (e.g., an antenna function), and the remaining portion may be formed of a polymer (e.g., a non-conductive member, a non-conductive portion, or a non-conductive material) combined with a metal material. The conductive portion of the lateral member may be at least one conductive member segmented by at least one non-conductive portion (e.g., a segmenting portion) to operate as an antenna.

The antenna volume and/or number of antennas used in electronic devices (mobile electronic devices or mobile terminals) may be determined depending on the frequency, bandwidth, and/or type of each service. For example, a low band of about 600 MHz to 960 MHz, a mid band of about 1700 MHz to 2200 MHz, a high band of about 2300 MHz to 2800 MHz, or a high frequency band of about 3 GHz to 300 GHz (e.g., 5G (NR)) (e.g., UHB/FR1, about 3.2 GHz to 4.5 GHz) may be used as the main communication band. In another example, various wireless communication services such as Bluetooth (BT), global positioning system (GPS), or wireless fidelity (WIFI) may be used. In order to support the above-mentioned communication bands, a plurality of antennas should be included in the electronic device, but as the electronic device becomes slimmer or the display area becomes larger, a space for the antennas to be disposed may be reduced. As a design to overcome this, service bands with similar frequency bands may be grouped and separated into multiple antennas.

In the case that such antennas are individually implemented to operate in all frequency bands supported by the electronic device, it may be difficult to meet operator's specifications, meet specific absorption rate (SAR) standards, and/or minimize human impact. Therefore, one antenna may be implemented to operate in a plurality of frequency bands. For example, the antenna may be configured to operate in multiple bands, such as low band and mid band, mid band and high band, and/or mid band, high band and nr, by including at least one matching circuit (e.g., matching time constant or lumped integer element) arranged in the electrical path.

However, as the number of antennas increases to accommodate the increasing frequency bands in increasingly slimmer electronic devices, there may be physical limitations in implementing optimal radiation performance in various bands. Furthermore, the radiation performance may be degraded by dielectric interference due to the user's grip on the electronic device. Also, in the case where a conductive member is applied to one housing of a foldable electronic device, the radiation performance of the antenna may be degraded when transitioning from an unfolded state to a folded state.

Various embodiments of the disclosure can provide an antenna, and an electronic device including the same, which can help to improve radiation performance through appropriate segmentation and power feeding of a conductive member used as the lateral member.

Various embodiments can provide an antenna having a layout structure that can help to improve coverage, and an electronic device including the same.

Various embodiments can provide an antenna configured to reduce the degree of radiation performance reduction due to a user's grip, and an electronic device including the same.

However, the problems to be solved in the disclosure are not limited to the above-mentioned problems and may be variously expanded without departing from the idea and scope of the disclosure.

### [Solution to Problem]

According to various embodiments, an electronic device may include at least one housing including a first side surface and a second side surface extending from the first side surface in a perpendicular direction, a conductor disposed in the housing and extends along the second side surface from the first side surface, a substrate including a ground plane disposed in an internal space of the housing, and a wireless communication circuit disposed on the substrate and configured to transmit or receive a wireless signal in a first frequency band through a first point of the conductor. The first point may be located at or adjacent to a corner of the conductor, and in the conductor, a first length of a first radiating portion located at one side from the first point may be equal to a second length of a second radiating portion disposed at other side, based on the first frequency band.

### [Advantageous Effects of Invention]

An antenna according to embodiments of the disclosure includes a first radiating portion and a second radiating portion extending from the first radiating portion in a perpendicular direction which have the same electrical length with respect to a feeding portion, and includes a conductive member operating with the same phase in a low band (LB), thereby improving coverage at a corner portion of an electronic device and reducing degradation of radiation performance due to a user's grip.

In addition, various effects explicitly or implicitly appreciated through the disclosure may be provided.

The effects obtainable from the disclosure are not limited to the above-mentioned effects, and other effects not mentioned will be clearly understood from the following description by a person having ordinary skill in the art to which the disclosure belongs.

### [Brief Description of Drawings]

In connection with the description of the drawings, the same or similar reference numerals may be used for the same or similar components.
FIG. 1 is a block diagram of an electronic device in a network environment according to various embodiments of the disclosure.
FIG. 2A is a front perspective view of an electronic device according to various embodiments of the disclosure.
FIG. 2B is a rear perspective view of an electronic device according to various embodiments of the disclosure.
FIG. 3 is an exploded perspective view of an electronic device according to various embodiments of the disclosure.
FIG. 4 is a configuration diagram of an electronic device including an antenna according to various embodiments of the disclosure.
FIG. 5 is a diagram illustrating a layout structure of an antenna according to various embodiments of the disclosure.
FIG. 6A is a graph comparing the radiation performance of an antenna when a first radiating portion and a second radiating portion operate alone and according to various embodiments of the disclosure.
FIG. 6B is a graph comparing the radiation pattern of an antenna when a first radiating portion and a second radiating portion operate alone and according to various embodiments of the disclosure.
FIG. 7A is a configuration diagram of an antenna according to various embodiments of the disclosure.
FIG. 7B is a graph comparing the radiation performance according to changes in the length of the second radiating portion of the antenna of FIG. 7A according to various embodiments of the disclosure.
FIG. 8A is a configuration diagram of an antenna including a tunable circuit according to various embodiments of the disclosure.
FIG. 8B is a configuration diagram of a tunable circuit according to various embodiments of the disclosure.
FIG. 8C is a graph comparing the radiation performance according to changes in the tunable circuit in the antenna of FIG. 8A according to various embodiments of the disclosure.
FIG. 9 is a configuration diagram of an antenna according to various embodiments of the disclosure.
FIG. 10A is a configuration diagram of an antenna according to various embodiments of the disclosure.
FIG. 10B is a cross-sectional view of a portion of an antenna viewed along line 10b-10b of FIG. 10A according to various embodiments of the disclosure.
FIG. 11 is a perspective view showing an unfolded state of an electronic device including an antenna according to various embodiments of the disclosure.
FIG. 12A is a graph showing the radiation performance of an antenna of a comparative example when an electronic device according to various embodiments of the disclosure transitions from an unfolded state to a folded state.
FIG. 12B is a graph showing the radiation performance of an antenna when an electronic device according to various embodiments of the disclosure transitions from an unfolded state to a folded state.
FIG. 13A is a perspective view showing an unfolded state of an electronic device including an antenna according to various embodiments of the disclosure.
FIG. 13B is a perspective view showing a folded state of an electronic device including an antenna according to various embodiments of the disclosure.
FIG. 14 is a perspective view showing an unfolded state of an electronic device including an antenna according to various embodiments of the disclosure.

### [Mode for the Invention]

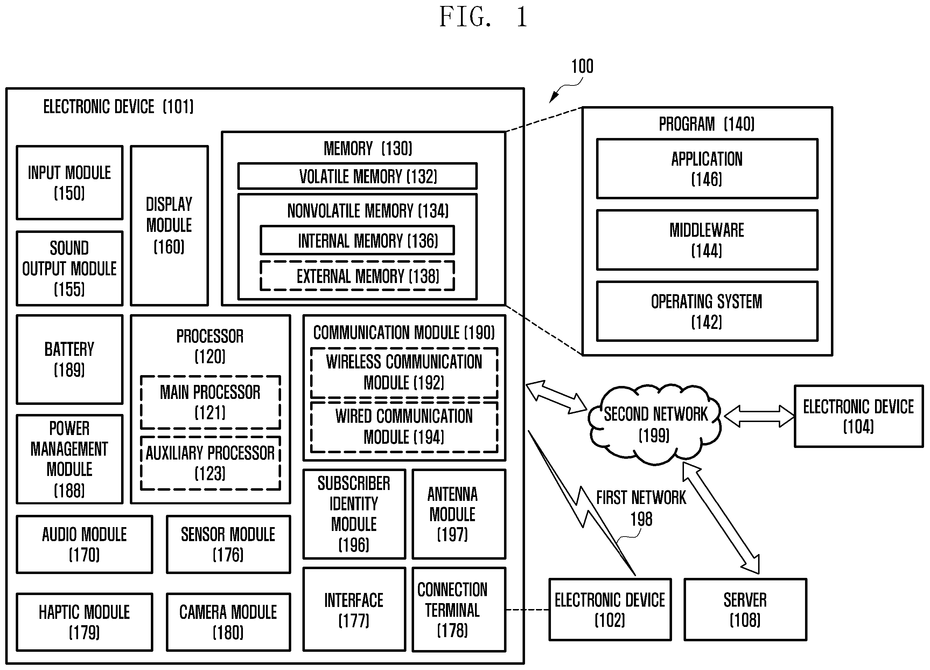

FIG. 1 is a block diagram illustrating an example electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 ora headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

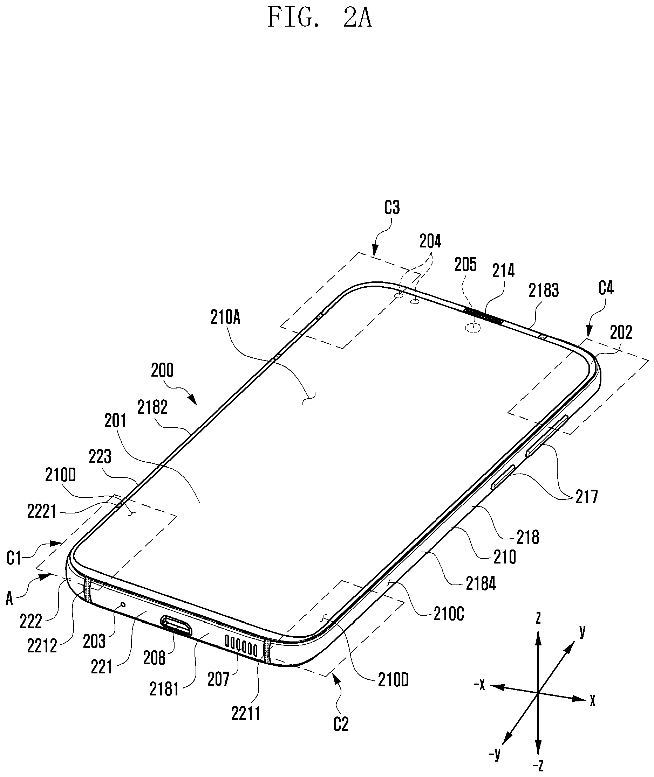

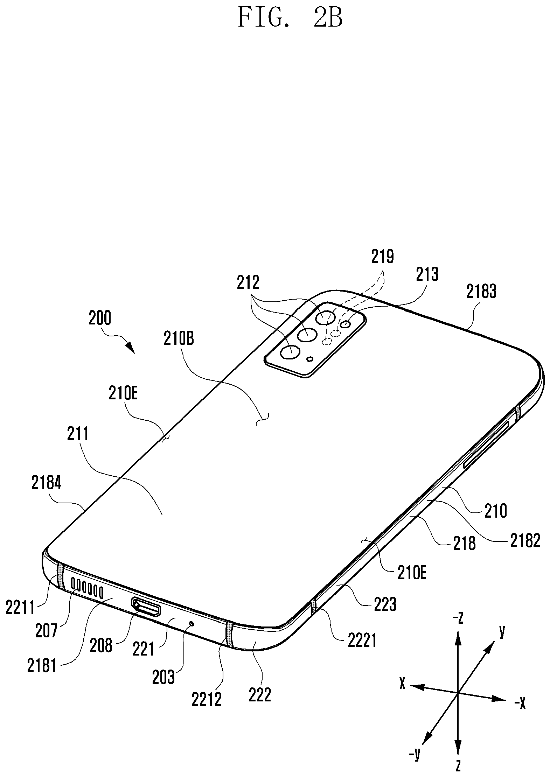

FIG. 2A isa front perspective view of an electronic device 200 according to an embodiment of the disclosure. FIG. 2B is a rear perspective view of a rear surface of the electronic device 200 shown in FIG. 2A according to \an embodiment of the disclosure.

The electronic device 200 in FIGS. 2A and 2B may be at least partially similar to the electronic device 101 in FIG. 1 or may further include other embodiments.

Referring to FIGS. 2A and 2B, the electronic device 200 may include a housing 210 that includes a first surface (or front surface) 210A, a second surface (or rear surface) 210B, and a lateral surface 210C that surrounds a space between the first surface 210A and the second surface 210B. The housing 210 may refer to a structure that forms a part of the first surface 210A, the second surface 210B, and the lateral surface 210C. The first surface 210A may be formed of a front plate 202 (e.g., a glass plate or polymer plate coated with a variety of coating layers) at least a part of which is substantially transparent. The second surface 210B may be formed of a rear plate 211 which is substantially opaque. The rear plate 211 may be formed of, for example, coated or colored glass, ceramic, polymer, metal (e.g., aluminum, stainless steel (STS), or magnesium), or any combination thereof. The lateral surface 210C may be formed of a lateral bezel structure (or "lateral member") 218 which is combined with the front plate 202 and the rear plate 211 and includes a metal and/or polymer. The rear plate 211 and the lateral bezel structure 218 may be integrally formed and may be of the same material (e.g., a metallic material such as aluminum).

The front plate 202 may include two first regions 210D disposed at long edges thereof, respectively, and bent and extended seamlessly from the first surface 210A toward the rear plate 211. Similarly, the rear plate 211 may include two second regions 210E disposed at long edges thereof, respectively, and bent and extended seamlessly from the second surface 210B toward the front plate 202. The front plate 202 (or the rear plate 211) may include only one of the first regions 210D (or of the second regions 210E). The first regions 210D or the second regions 210E may be omitted in part. When viewed from a lateral side of the electronic device 200, the lateral bezel structure 218 may have a first thickness (or width) on a lateral side where the first region 210D or the second region 210E is not included, and may have a second thickness, being less than the first thickness, on another lateral side where the first region 210D or the second region 210E is included.

The electronic device 200 may include at least one of a display 201, audio modules 203, 207 and 214, sensor modules 204 and 219, camera modules 205, 212 and 213, a key input device 217, a light emitting device, and connector holes 208 and 209. The electronic device 200 may omit at least one (e.g., the key input device 217 or the light emitting device) of the above components, or may further include other components.

The display 201 may be visiblethrough a substantial portion of the front plate 202, for example. At least a part of the display 201 may be visiblethrough the front plate 202 that forms the first surface 210A and the first region 210D of the lateral surface 210C. The display201 may be combined with, or adjacent to, a touch sensing circuit, a pressure sensor capable of measuring the touch strength (pressure), and/or a digitizer for detecting a stylus pen. At least a part of the sensor modules 204 and 219 and/or at least a part of the key input device 217 may be disposed in the first region 210D and/or the second region 210E.

According to certain embodiments, the input device 203 may include a microphone. In certain embodiments, the input device 203 may include a plurality of microphones disposed to detect the direction of a sound. According to an embodiment, the sound output devices may include speakers. According to an embodiment, the speakers may include external speaker 207 and a receiver 214 for calls. In certain embodiments, the microphone, the speakers, and the connector port 208 may be disposed in a space of in the electronic device 200 and may be exposed to the external environment through at least one hole formed in the housing 210. In certain embodiments, the hole formed in the housing 210 may be used jointly for microphones and speakers. In certain embodiments, the sound output devices 207 and 214 may include a speaker (e.g., piezo speaker) that operates without using a hole formed in the first housing 210 and/or the second housing 220. In certain embodiments, the electronic device 200 may include a tray member disposed through at least a portion of the lateral bezel structure 218.

The sensor modules 204 and 219 may generate electrical signals or data corresponding to an internal operating state of the electronic device 200 or to an external environmental condition. The sensor modules 204 and 219 may include a first sensor module 204 (e.g., a proximity sensor) and/or a second sensor module (e.g., a fingerprint sensor) disposed on the first surface 210A of the housing 210, and/or a third sensor module 219 (e.g., a heart rate monitor (HRM) sensor) and/or a fourth sensor module (e.g., a fingerprint sensor) disposed on the second surface 210B of the housing 210. The fingerprint sensor may be disposed on the second surface 210B as well as the first surface 210A (e.g., the display 201) of the housing 210. The electronic device 200 may further include at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212 and 213 may include a first camera device 205 disposed on the first surface 210A of the electronic device 200, and a second camera device 212 and/or a flash 213 disposed on the second surface 210B. The camera module 205 or the camera module 212 may include one or more lenses, an image sensor, and/or an image signal processor. The flash 213 may include, for example, a light emitting diode or a xenon lamp. Two or more lenses (infrared cameras, wide angle and telephoto lenses) and image sensors may be disposed on one side of the electronic device 200.

The key input device 217 may be disposed on the lateral surface 210C of the housing 210. The electronic device 200 may not include some or all of the key input device 217 described above, and the key input device 217 which is not included may be implemented in another form such as a soft key on the display 201. The key input device 217 may include the sensor module disposed on the second surface 210B of the housing 210.

The indicator may be disposed on the first surface 210A of the housing 210. For example, the indicator may provide status information of the electronic device 200 in an optical form. The indicator may provide a light source associated with the operation of the camera module 205. The indicator may include, for example, a light emitting diode (LED), an IR LED, or a xenon lamp.

The connector hole 208 may include a first connector hole 208 adapted for a connector (e.g., a USB connector) for transmitting and receiving power and/or data to and from an external electronic device, and/or a second connector hole adapted for a connector (e.g., an earphone jack) for transmitting and receiving an audio signal to and from an external electronic device.

Some camera modules 205 of camera modules 205 and 212, some sensor modules 204 of sensor modules 204 and 219, or an indicator may be arranged to be exposed through a display 201. For example, the camera module 205, the sensor module 204, or the indicator may be arranged in the internal space of an electronic device 200 so as to be brought into contact with an external environment through an opening of the display 201, which is perforated up to a front plate 202. According to an embodiment, an area corresponding to some camera module 105 of the display201 is a part of an area in which content is displayed, and may be formed as a transmission area having designated transmittance. For example, the transmission area may be formed to have transmittance having a range of about 5% to about 20%. The transmission area may include an area overlapped with a valid area (e.g., a field of view (FOV)) of the camera module 105 through which light imaged by an image sensor and for generating an image passes. For example, a transmission area of the display201 may include an area in which the density of pixels and/or a wiring density are lower than that of surroundings. The camera module 205 may include, for example, under display camera (UDC). **In** anembodiment, some sensor modules 204 may be arranged to perform their functions without being visually exposed through the front plate 202 in the internal space of the electronic device. For example, in this case, an area of the display201 facing the sensor module may not require a perforated opening.

According to various embodiments, the conductive lateral bezel structure 218 may form at least a portion of the side surface 210C of the electronic device 200 and may be disposed to be at least in part exposed to the outside. In an embodiment, the conductive lateral bezel structure 218 may include a first side surface 2181 having a first length, a second side surface 2182 extending from the first side surface 2181 in a perpendicular direction and having a second length greater than the first length, a third side surface 2183 extending from the second side surface 2182 in a direction parallel to the first side surface 2181 and having the first length, and a fourth side surface 2184 extending from the third side surface 2183 in a direction parallel to the second side surface 2182 and having the second length. In an embodiment, the electronic device 200 may include conductive members 221, 222, and 223 (e.g., conductive portions) segmented by segmenting portions 2211, 2212, and 2221 (e.g., non-conductive portions) disposed on at least parts of the conductive lateral bezel structure 218. In an embodiment, the conductive members 221, 222, and 223 may include a first conductive member 221 segmented through a first segmenting portion 2211 and a second segmenting portion 2212 spaced apart from each other by a specified interval on the first side surface 2181 of the electronic device 200, a second conductive member 222 segmented through the second segmenting portion 2212 and a second segmenting portion 2221 formed on the second side surface 2182 extending perpendicularly from the first side surface 2181 of the electronic device 200, and a third conductive member 223 segmented through the third segmenting portion 2221. In an embodiment, the second conductive member 222 is electrically connected to a wireless communication circuit (e.g., the wireless communication module 192 in FIG. 1) of the electronic device 200 so that it can be used as an antenna operating in a designated frequency band (e.g., low band).

According to an embodiment of the disclosure, the second conductive member 222 may be formed in an 'L' shape including a first radiating portion and a second radiating portion having the same electrical length based on a power feeding portion electrically connected to the wireless communication circuit (e.g., the wireless communication module 192 in FIG. 1) near a first corner C1 of the electronic device 200. An antenna A through the second conductive member 222 operates so that the first and second radiating portions are configured to have a radiation direction in the same phase between the first and second side surfaces, thereby being advantageous in securing coverage and helping to reduce deterioration in the radiation performance of the antenna A due to the user's grip. In some embodiment, the antenna A1 may be relocated to other corners C2, C3, and C4 of the electronic device, or may be additionally disposed near at least one of the other corners C2, C3, and C4.

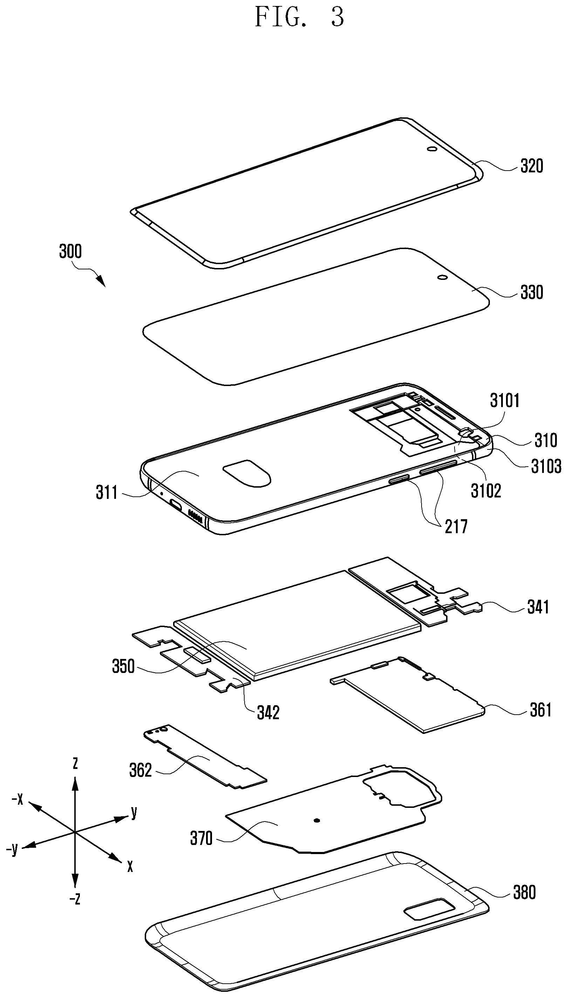

FIG. 3 is an exploded perspective view of an electronic device according to various embodiments of the disclosure.

The electronic device 300 in FIG. 3 may be similar at least in part to the electronic device 101 in FIG. 1 and/or the electronic device 200 in FIG. 2A, or may include other embodiments of the electronic device.

With reference to FIG. 3, the electronic device 300 (e.g., the electronic device 101 in FIG. 1 or the electronic device 200 in FIG. 2) may include a lateral member 310 (e.g., the lateral bezel structure 218 in FIG. 2A), a support member 311 (e.g., a bracket or a support structure), a front cover 320 (e.g., the front plate 202 or the first plate in FIG. 2A), a display 330 (e.g., the display 201 in FIG. 2A), at least one substrate 341 and 342 (e.g., a printed circuit board (PCB), a flexible PCB (FPCB), or a rigid-flexible PCB (R-FPCB)), a battery 350, at least one additional support member 361 and 362 (e.g., a rear case or a rear bracket), an antenna 370, and/or a rear cover 380 (e.g., the rear plate 211 or the second plate in of FIG. 2). In some embodiment, the electronic device 300 may omit at least one (e.g., the support member 311 or the at least one additional support member 361 and 362) of the components or may additionally include other components. At least one of the components of the electronic device 300 may be identical or similar to at least one of the components of the electronic device 101 in FIG. 1 or the electronic device 200 in FIG. 2A, and any duplicate description may be omitted.

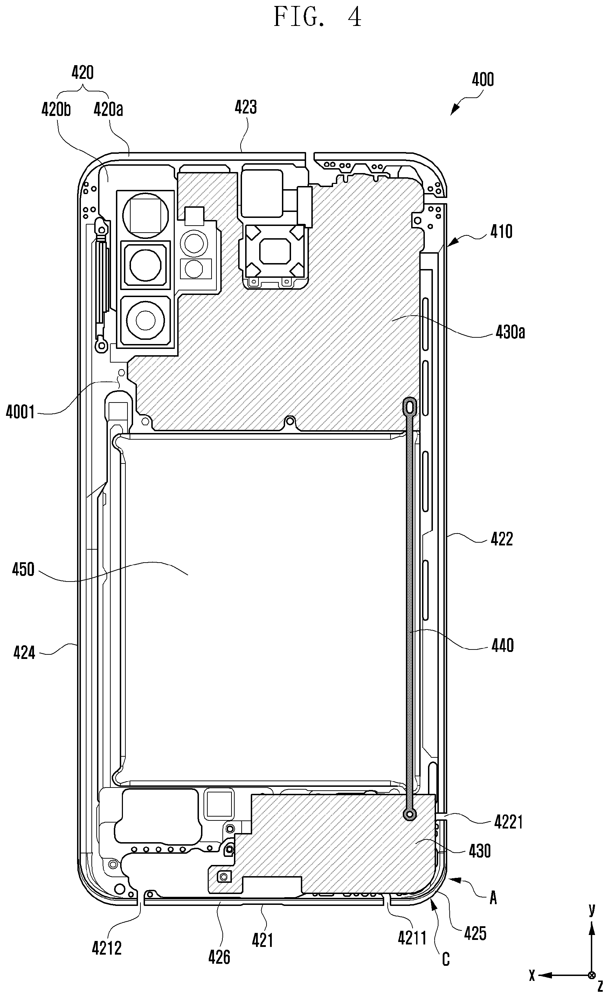

According to various embodiments, the lateral member 310 may include a first surface 3101 facing a first direction (e.g., the z-axis direction), a second surface 3102 facing an opposite direction to the first surface 3101, and a side surface 3103 surrounding a space between the first surface 3101 and the second surface 3102. According to an embodiment, at least a portion of the side surface 3103 may form an outer appearance of the electronic device 300. According to an embodiment, the support member 311 may be disposed in a manner that extends from the lateral member 310 toward an internal space (e.g., the internal space 4001 in FIG. 4) of the electronic device 300. In some embodiment, the support member 311 may be disposed separately from the lateral member 310. According to an embodiment, the lateral member 310 and/or the support member 311 may be formed of, for example, a metal material and/or a non-metal material (e.g., a polymer). According to an embodiment, the support member 311 may be disposed to support at least a portion of the display 330 through the first surface 3101 and support at least a portion of the at least one substrate 341 and 342 and/or the battery 350 through the second surface 3102. According to an embodiment, the at least one substrate 341 and 342 may include a first substrate 341 (e.g., a main substrate) disposed on one side with respect to the battery 350 in the internal space (e.g., the internal space 4001 in FIG. 4) of the electronic device 300 and a second substrate 342 (e.g., a sub substrate) disposed on the other side. According to an embodiment, the first substrate 341 and/or the second substrate 342 may include a processor, a memory, and/or an interface. According to an embodiment, the processor may include, for example, one or more of a central processing unit, an application processor, a graphics processing unit, an image signal processor, a sensor hub processor, or a communication processor. According to an embodiment, the memory may include, for example, volatile memory or non-volatile memory. According to an embodiment, the interface may include, for example, a high definition multimedia interface (HDMI), a universal serial bus (USB) interface, an SD card interface, and/or an audio interface. The interface may electrically or physically connect the electronic device 300 to an external electronic device and may include, for example, a USB connector, an SD card/MMC connector, or an audio connector. According to an embodiment, the battery 350 is a device for supplying power to at least one component of the electronic device 300 and may include, for example, a non-rechargeable primary battery, a rechargeable secondary battery, or a fuel cell. At least a portion of the battery 350 may be disposed substantially coplanar with, for example, the at least one substrate 341 and 342. According to an embodiment, the battery 350 may be disposed in a manner that it is embedded in the electronic device 300. In some embodiment, the battery 350 may be disposed so as to be detachable from the electronic device 300.

According to various embodiments, the antenna 370 may be disposed between the rear cover 380 and the battery 350. According to an embodiment, the antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging. In some embodiment, the antenna may be formed by a portion or a combination of the lateral member 310 and/or the support member 311.

FIG. 4 is a configuration diagram of an electronic device including an antenna according to various embodiments of the disclosure.

The electronic device 400 in FIG. 4 may be similar at least in part to the electronic device 101 in FIG. 1 or the electronic device 200 in FIG. 2A or the electronic device 300 in FIG. 3, or may further include other embodiments of the electronic device.

FIG. 4 is a configuration diagram showing the rear surface (e.g., the rear surface 210B in FIG. 2B) of the electronic device 400 in a state where the rear cover (e.g., the rear plate 211 in FIG. 2B) is removed.

With reference to FIG. 4, the electronic device 400 may include a housing 410 (e.g., the housing 210 in FIG. 2A) including a front cover (e.g., the front plate 202 in FIG. 2A), a rear cover facing in the opposite direction to the front cover (e.g., the rear plate 211 in FIG. 2B), and a lateral member 420 (e.g., the lateral member 218 in FIG. 2A) surrounding an internal space 4001 between the front cover and the rear cover. In an embodiment, the lateral member 420 may include a metal material 420a and a polymer material 420b combined with the metal material 420a. In an embodiment, the metal material 420a and the polymer material 420b may be combined through injection molding or structurally combined.

According to various embodiments, the lateral member 420 may include a first side surface 421 (e.g., the first side surface 2181 in FIG. 2A) having a first length, a second side surface 422 (e.g., the second side surface 2182 in FIG. 2A) extending from the first side surface 421 in a perpendicular direction and having a second length greater than the first length, a third side surface 423 (e.g., the third side surface 2183 in FIG. 2A) extending from the second side surface 422 in a direction parallel to the first side surface 421 and having the first length, and a fourth side surface 424 (e.g., the fourth side surface 2184 in FIG. 2A) extending from the third side surface 423 in a direction parallel to the second side surface 422 and having the second length.

According to various embodiments, the electronic device 400 may include a substrate 430 (e.g., a first substrate or printed circuit board) disposed in the internal space 4001 and/or a sub-substrate 430a (e.g., a second substrate or printed circuit board) disposed spaced apart from the substrate 430. In an embodiment, the electronic device 400 may include at least one wireless communication circuit (e.g., the wireless communication module 192 in FIG. 1) disposed on the substrate 430. In an embodiment, the electronic device 400 may include a battery 450 disposed between the substrate 430 and the sub-substrate 430a. In an embodiment, the battery 450 may be disposed so as not to overlap with the substrate 430 and/or the sub-substrate 430a. In another embodiment, the battery 450 may be disposed so as to overlap at least in part with the substrate 430 and/or the sub-substrate 430a. In an embodiment, the substrate 430 may be electrically connected to the sub-substrate 430a via an electrical connection member 440. In an embodiment, the electrical connection member 440 may include an RF coaxial cable or a flexible printed circuit board (FPCB) type RF cable (FRC). In an embodiment, the wireless communication circuit (e.g., the wireless communication module 192 in FIG. 1) may be disposed on the substrate 430. In some embodiment, the wireless communication circuit (e.g., the wireless communication module 192 in FIG. 1) may be disposed on the sub-substrate 430a and electrically connected to the substrate 430 via the electrical connection member 440.

According to various embodiments, the lateral member 420 may include a conductive member 425, as a conductor, segmented through segmenting portions 4211 and 4221. For example, the conductive member 425 may be segmented from the surrounding metal material 420a through a first segmenting portion 4211 disposed on at least a portion of the first side surface 421 and a second segmenting portion 4221 disposed on at least a portion of the second side surface 422. In an embodiment, the electronic device 400 may also include another conductive member 426 segmented from the surrounding metal material 420a through the first segmenting portion 4211 and a third segmenting portion 4212 spaced apart from the first segmenting portion 4211 on the first side surface 421. In an embodiment, the substrate 430 may electrically connect one point of the conductive member 425 and the wireless communication circuit (e.g., the wireless communication module 192 in FIG. 1) through an assembly process in which the substrate 430 is mounted in the internal space 4001 of the housing 410. For example, the conductive member 425 electrically connected to the wireless communication circuit (e.g., the wireless communication module 192 in FIG. 1) of the substrate 430 can be used as a radiator of the antenna A in the low band (LB).

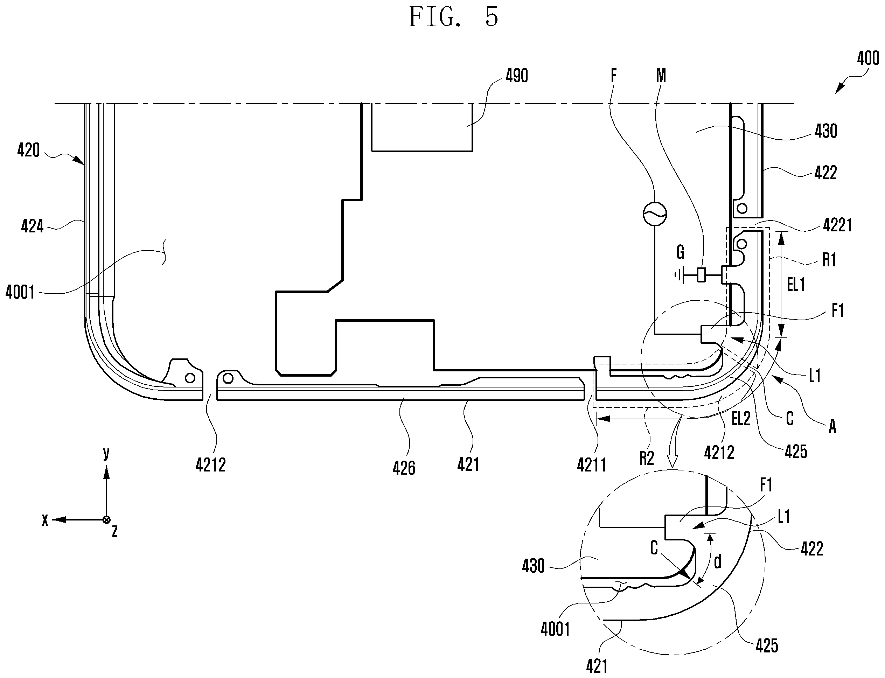

According to an embodiment of the disclosure, the conductive member 425 used as the antenna A may form a feeding portion connected to the wireless communication circuit (e.g., the wireless communication module 192 in FIG. 1) at or near the corner C where the first and second side surfaces 421 and 422 of the electronic device 400 meet. In an embodiment, the first and second segmenting portions 4211 and 4221 may be positioned such that an electrical length (e.g., a length of a part of the first side surface corresponding to (based on) the operating frequency band of the antenna) using a part of the first side surface 421 from the feeding portion (e.g., the feeding portion F1 in FIG. 5) is substantially the same as an electrical length (e.g., a length of a part of the second side surface corresponding to (based on) the operating frequency band of the antenna) using a part of the second side surface 422 from the feeding portion. In an embodiment, the antenna A is configured to operate with the same phase in a low band, thereby inducing the radiation direction to be set in a direction (e.g., a direction between the negative x-axis and the negative y-axis) (e.g., a direction in which the corner C faces) between a direction (e.g., the negative y-axis direction) in which the first side surface 421 faces and a direction (e.g., the negative x-axis direction) in which the second side surface 422 faces, thereby helping to secure the coverage of the antenna A. For example, the feeding portion may include a flange.

FIG. 5 is a diagram illustrating a layout structure of an antenna according to various embodiments of the disclosure.

The electronic device 400 in FIG. 5 may be similar at least in part to the electronic device 400 in FIG. 4, or may further include other embodiments of the electronic device.

With reference to FIG. 5, the electronic device 400 may include the lateral member 420 that forms at least a part of side surfaces of the electronic device 400. In an embodiment, the lateral member 420 may include the first side surface 421 and the second side surface 422 extending from the first side surface 421 in a perpendicular direction (e.g., in the y-axis direction). In an embodiment, the electronic device 400 may include the conductive member 425 disposed through a part of the first side surface 421 segmented through the first segmenting portion 4211 and a part of the second side surface 422 segmented through the second segmenting portion 4221, and used as the antenna A. In an embodiment, the conductive member 425 may be formed in a vertically folded 'L' shape through the first side surface 421 and the second side surface 422. In an embodiment, the electronic device 400 may include the substrate 430 disposed in the internal space 4001, and at least one processor 490 (e.g., the processor 120 in FIG. 1) and a wireless communication circuit F (e.g., the wireless communication module 192 in FIG. 1) disposed on the substrate 430. In an embodiment, the conductive member 425 may be electrically connected to the wireless communication circuit F and thus used as a radiator of the antenna A that operates in a designated frequency band (e.g., low band (LB)).

According to various embodiments, the antenna A may include the feeding portion F1 formed at the corner C where the first and second side surfaces 421 and 422 of the electronic device 400 meet, or formed at a first point L1 near the corner C. In an embodiment, the antenna A may be electrically connected to the wireless communication circuit F through the feeding portion F1. In an embodiment, the feeding portion F1 may include a protrusion that protrudes from the conductive member 425 into the internal space 4001, and the substrate 430 may be disposed to be electrically connected to the protrusion in the internal space 4001, so that the protrusion and the wireless communication circuit F may be electrically connected. In an embodiment, a distance d from the corner C to the first point L1 may be configured so as not to exceed about 5 mm.

According to various embodiments, the antenna A may include, based on the feeding portion F1 of the conductive member 425, a first radiating portion R1 using a part of the second side surface 422 and a second radiating portion R2 using a part of the first side surface 421 extending perpendicularly from the second side surface 422. In an embodiment, the first radiating portion R1 may be configured to have a first electrical length EL1 (e.g., a first length or first physical length corresponding to the operating frequency band of the antenna A) from the feeding portion F1 generally through the second side surface 422. In an embodiment, the second radiating portion R2 may be configured to have a second electrical length EL2 (e.g., a second length or second physical length corresponding to the operating frequency band of the antenna A) from the feeding portion F1 generally through the first side surface 421. In an embodiment, in the case that the feeding portion F1 is positioned at a part of the second side surface 422 in the conductive member 425, the second radiating portion R2 may include a part of the second side surface 422. In some embodiment, in the case that the feeding portion F1 is positioned at a part of the first side surface 421 in the conductive member 425, the first radiating portion R1 may include a part of the first side surface 421. In some embodiment, in the case that the feeding portion F1 is positioned at the corner C of the conductive member 425, the first radiating portion R1 may be configured to use only a part of the second side surface 422, and the second radiating portion R2 may be configured to use only a part of the first side surface 421. In an embodiment, the first electrical length EL1 may be configured to be substantially equal to the second electrical length EL2. In an embodiment, each of the first electrical length EL1 and the second electrical length EL2 may be configured to have an electrical length of about λ/4 based on the operating frequency band (e.g., low band) of the antenna. In an embodiment, at least a part of the first radiating portion R1 may include at least one matching circuit M disposed in an electrical path electrically connected to the ground G of the substrate 430. In an embodiment, the antenna A may be configured such that the first electrical length EL1 and the second electrical length EL2 are substantially equal, depending on the positioning of the first segmenting portion 4211 and the second segmenting portion 4221. In an embodiment, the antenna A1 may be configured such that the first electrical length EL1 and the second electrical length EL2 are substantially equal through at least one matching circuit M and/or a tunable circuit (tunable IC) electrically connected to the first radiating portion R1 and/or the second radiating portion R2.

The antenna A according to an embodiment of the disclosure is configured such that the first and second radiating portions R1 and R2 operate with the same phase in a low band, based on the feeding portion F1, thereby being advantageous in securing coverage and helping to reduce radiation performance degradation due to the user's grip on the electronic device 400.

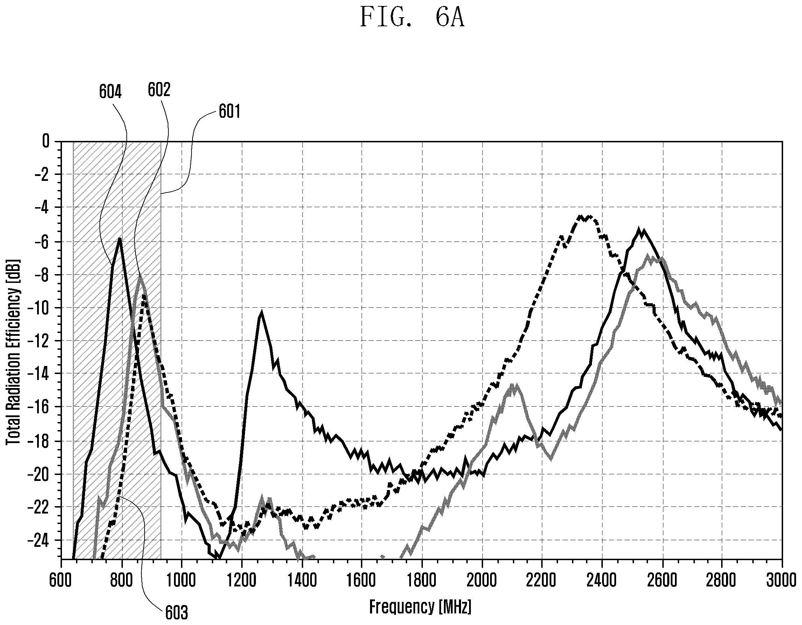

FIG. 6A is a graph comparing the radiation performance of an antenna when a first radiating portion and a second radiating portion operate alone and according to various embodiments of the disclosure.

As shown in FIG. 6A, it can be seen that compared to the cases (graphs 602 and 603) where the first and second radiating portions R1 and R2 of the conductive member 425 operate individually, relatively superior radiation performance is exhibited in the low band (region 601) in the case 604 where the first and second radiating portions R1 and R2 are disposed to have the same electrical length based on the feeding portion F1 and operate together with the same phase.

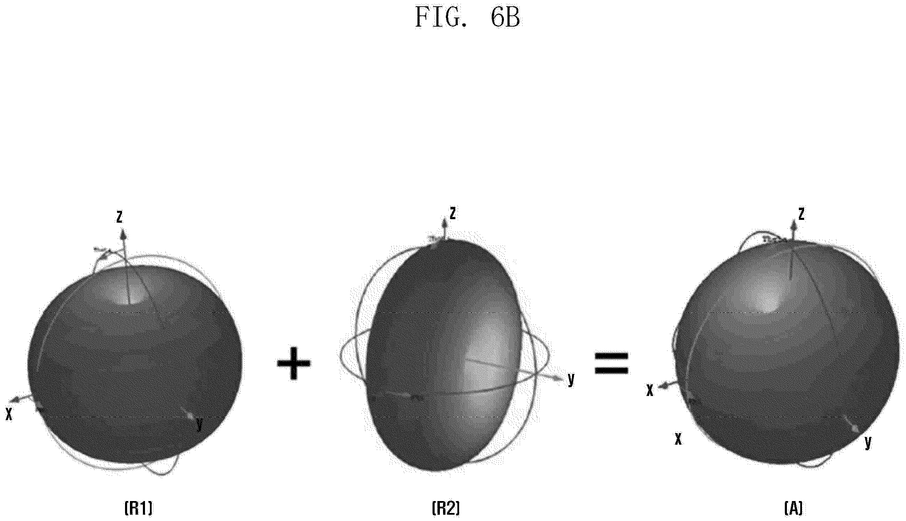

FIG. 6B is a graph comparing the radiation pattern of an antenna when a first radiating portion and a second radiating portion operate alone and according to various embodiments of the disclosure.

As shown in FIG. 6B, when only the first radiating portion R1 operates, a null is generated in a direction parallel to the second side surface (e.g., the second side surface 422 in FIG. 5), and when only the second radiating portion R2 operates, a null is generated in a direction parallel to the first side surface (e.g., the first side surface 421 in FIG. 5). On the other hand, when the first radiating portion R1 and the second radiating portion R2 operate together with the same phase, it can be seen that a null is formed in a direction of about 45 degrees between the first side surface 421 and the second side surface 422. This may mean that when the first and second radiating portions R1 and R2 formed to have the same electrical length based on the feeding portion F1 operate together with the same phase, the antenna A determines the radiation direction toward the corner C, which is advantageous for securing the coverage of the antenna A.

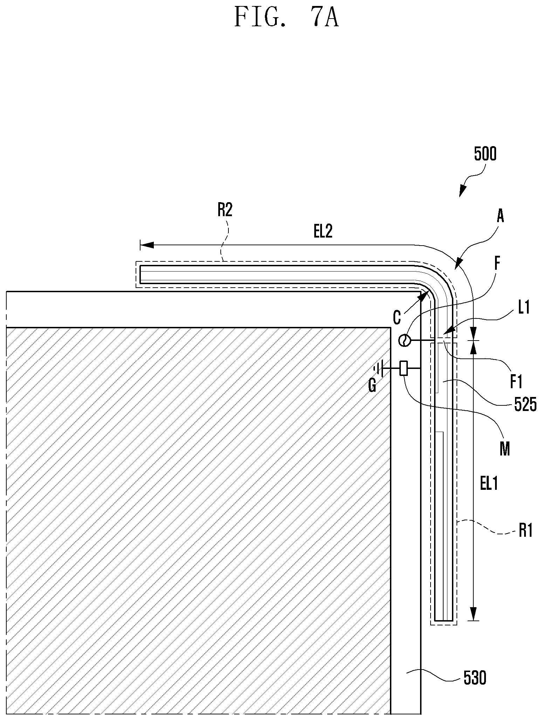

FIG. 7A is a configuration diagram of an antenna according to various embodiments of the disclosure.

The electronic device 500 in FIG. 7A may be similar at least in part to the electronic device 400 in FIG. 5, or may further include other embodiments of the electronic device.

With reference to FIG. 7A, the electronic device 500 may include an antenna A that operates using a conductive member 525 (e.g., the conductive member 425 in FIG. 5) having a first radiating portion R1 and a second radiating portion R2 that are perpendicularly bent based on a corner C. In an embodiment, the antenna A may include a feeding portion F1 positioned at a first point L1 of the first radiating portion R1 and electrically connected to a wireless communication circuit F (e.g., the wireless communication circuit F in FIG. 5) of a substrate 530 (e.g., the substrate 430 in FIG. 5). In an embodiment, the first radiating portion R1 may be configured to have a first electrical length EL1 from the feeding portion F1. In an embodiment, the second radiating portion R2 may be configured to have a second electrical length EL2 from the feeding portion F1. In an embodiment, the first electrical length EL1 of the first radiating portion R1 and the second electrical length EL2 of the second radiating portion R2 may be configured to be substantially the same. In an embodiment, the first electrical length EL1 and the second electrical length EL2 may be configured as an electrical length of λ/4 based on the operating frequency band (e.g., low band) of the antenna A.

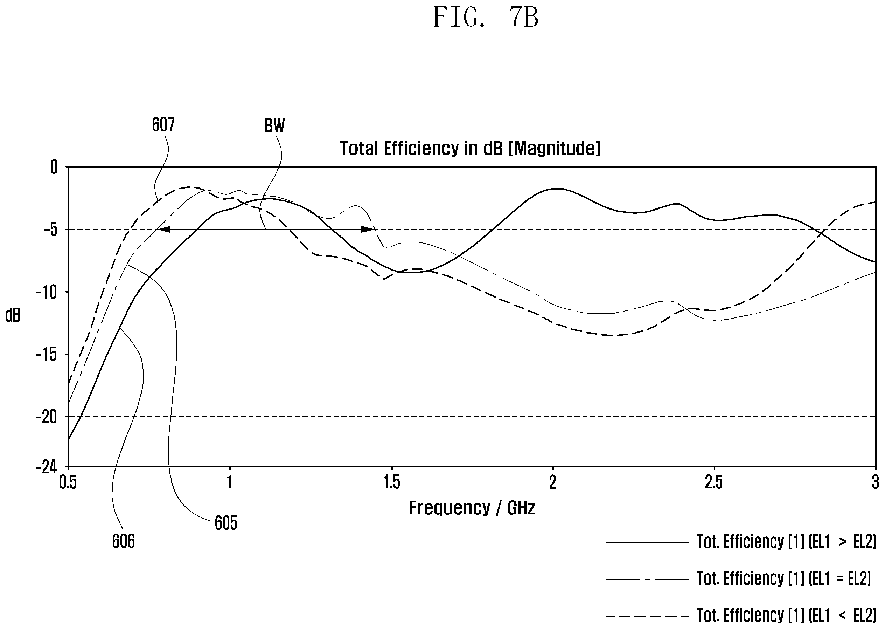

FIG. 7B is a graph comparing the radiation performance according to changes in the length of the second radiating portion of the antenna of FIG. 7A according to various embodiments of the disclosure.

As shown in FIG. 7B, it can be seen that compared to the cases (graphs 606 and 607) where the electrical length EL2 of the second radiating portion R2 is smaller or greater than the electrical length EL1 of the first radiating portion R1, a wider bandwidth (BW) is secured in the low band based on -5 dB in the case (graph 605) where the electrical lengths of the first and second radiating portions R1 and R2 of the conductive member 525 are substantially the same. This may mean that when the first and second radiating portions R1 and R2 formed to have the same electrical length based on the feeding portion F1 operate together with the same phase, the antenna A exhibits relatively better radiation performance than when the electrical lengths of the first and second radiating portions R1 and R2 are different from each other.

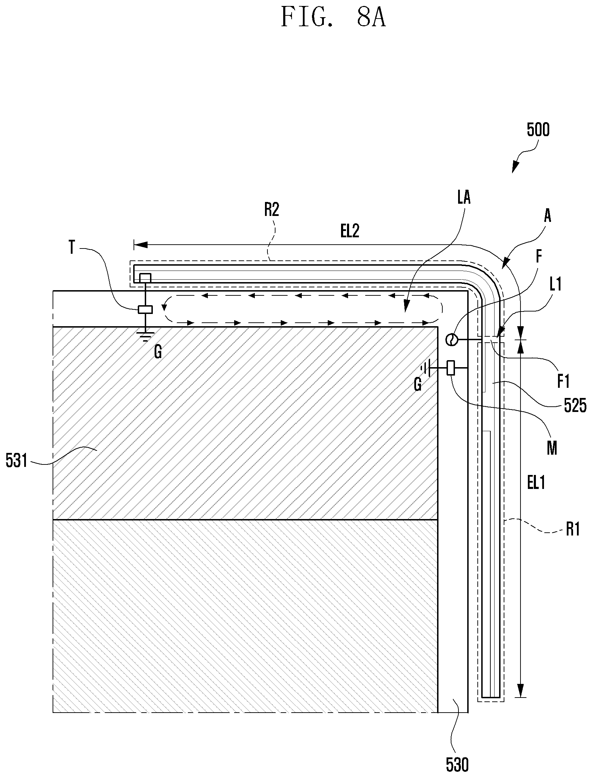

FIG. 8A is a configuration diagram of an antenna including a tunable circuit according to various embodiments of the disclosure.

In describing the electronic device 500 in FIG. 8A, the same symbols are given to components that are substantially the same as those of the electronic device 500 in FIG. 7A, and a detailed description thereof may be omitted.

With reference to FIG. 8A, the electronic device 500 may include an antenna A that operates using a conductive member 525 (e.g., the conductive member 425 in FIG. 5) having a first radiating portion R1 and a second radiating portion R2 that are perpendicularly bent based on a corner C. In an embodiment, the antenna A may include a feeding portion F1 positioned at a first point L1 of the first radiating portion A and electrically connected to a wireless communication circuit F (e.g., the wireless communication circuit F in FIG. 5) of a substrate 530 (e.g., the substrate 430 in FIG. 5). In an embodiment, the first radiating portion R1 may be configured to have a first electrical length EL1 from the feeding portion F1. In an embodiment, the second radiating portion R2 may be configured to have a second electrical length EL2 from the feeding portion F1. In an embodiment, the first electrical length EL1 of the first radiating portion R1 and the second electrical length EL2 of the second radiating portion R2 may be configured to be substantially the same.

According to various embodiments, the antenna A may include a tunable circuit T (tunable IC) disposed in an electrical path connecting a ground plane 531 (e.g., X ground) of the substrate 530 from a position adjacent to a distal end portion of the second radiating portion R2 of the conductive member 525. In an embodiment, the antenna A may operate in a first frequency band with the first radiating portion R1 and the second radiating portion R2 having the same electrical length EL1 and EL2 in the same phase. In an embodiment, the antenna A may operate in a second frequency band different from the first frequency band through a space between the second radiating portion R2 and the ground plane 531 of the substrate 530 under the control of the tunable circuit T. For example, the antenna A may be operated in a low band through the first and second radiating portions R1 and R2 having the same electrical length and operating as an inverted F antenna (IFA), and may be operated as a loop antenna (LA) in a mid band through the space between the second radiating portion R2 and the ground plane 531 of the substrate 530. In an embodiment, the tunable circuit T is interposed in an electrical path connected to the ground plane 531 of the substrate 530 at a position adjacent to the distal end of the second radiating portion R2 of the conductive member 525, so that when the electrical connection between the conductive member 525 and the ground plane 531 is configured to open through the tunable circuit T, the first frequency band of the antenna A1 may be configured to about 900 MHz in the low band.

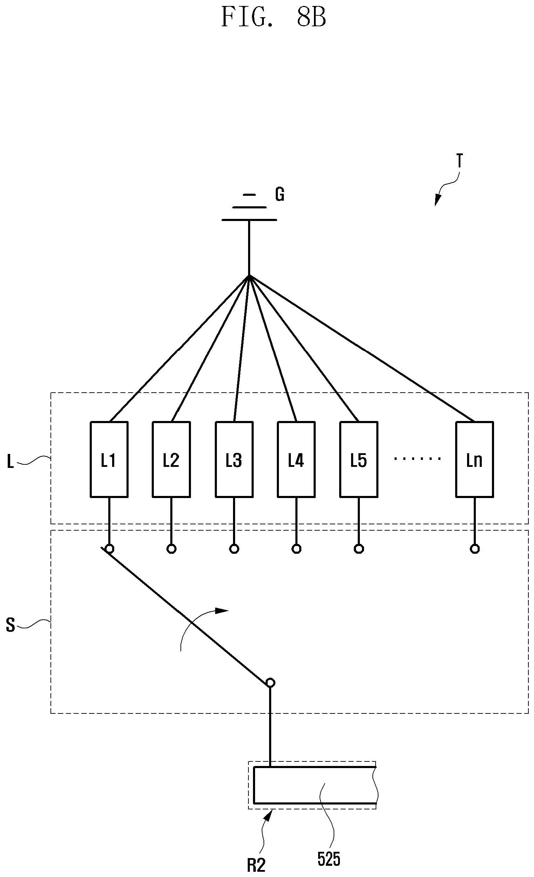

FIG. 8B is a configuration diagram of a tunable circuit according to various embodiments of the disclosure.

With reference to FIG. 8B, the tunable circuit T may include a switching circuit S and a plurality of inductors L (L1, L2, L3, L4, L5 ... Ln) having different inductance values and switched through the switching circuit S. In some embodiment, the tunable circuit T may further include at least one capacitor. According to an embodiment, the tunable circuit T may electrically connect the second radiating portion R2 of the conductive member 525 and the ground plane 531 of the substrate 530 through any one of the plurality of inductors L under the control of a processor (e.g., the processor 120 in FIG. 1).

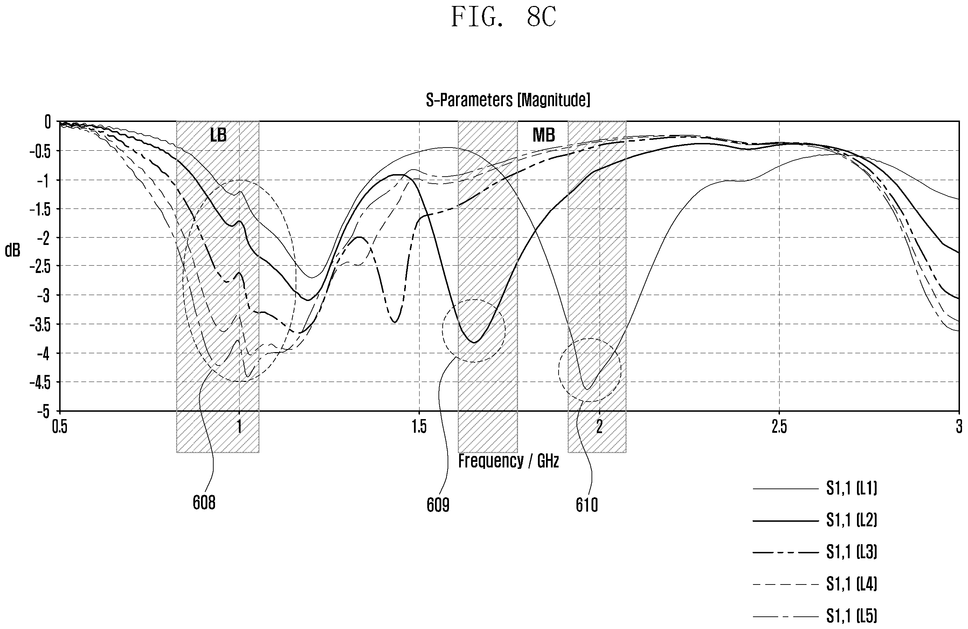

FIG. 8C is a graph comparing the radiation performance according to changes in the tunable circuit in the antenna of FIG. 8A according to various embodiments of the disclosure.

With reference to FIG. 8C, a position adjacent to the distal end of the second radiating portion R2 of the conductive member 525 may be connected to the ground plane 531 of the substrate 530 through the tunable circuit T. In an embodiment, with the operating frequency band of the low band fixed (region 608), whether the antenna A operates in the mid band of the antenna LA may be determined depending on the inductance value of the inductor L of the tunable circuit T. For example, if the inductance value (e.g., 27nh, 47nh, or 68nh) of the inductor L3, L4, or L5 of the antenna LA is determined to be relatively large through the tunable circuit T, the connection between the distal end of the second radiating portion R2 and the ground plane 531 seems to be open, and the antenna may not be operated in the mid band. In an embodiment, when the inductance value (e.g., 1 nh or 10 nh) of the inductor L1 or L2 is determined to be relatively small, the distal end of the second radiating portion R2 is connected to the ground plane 531, and the antenna LA may be operated in the mid band. In an embodiment, when the antenna LA is operated, as the inductance value of the inductor L becomes smaller, the frequency band may be shifted from the mid band to a relatively high frequency band. For example, as shown, when the distal end of the second radiating portion R1 and the ground plane 531 are connected through an inductor L1 having an inductance value of 1 nh (region 610) under the control of the tunable circuit T, it can be seen that the antenna operates at a relatively higher frequency band in the mid band than when the distal end of the second radiating portion R1 and the ground plane 531 are connected through an inductor L2 having an inductance value of 10 nh (region 609). This may mean that the 'L' type antenna A in which the first and second radiating portions R1 and R2 are integrally formed to have the same electrical length EL1 and EL2 based on the feeding portion F1 can be utilized as a dual-band antenna that not only operates in the low band but also operates in the mid band through selective connection with the surrounding ground plane 531.

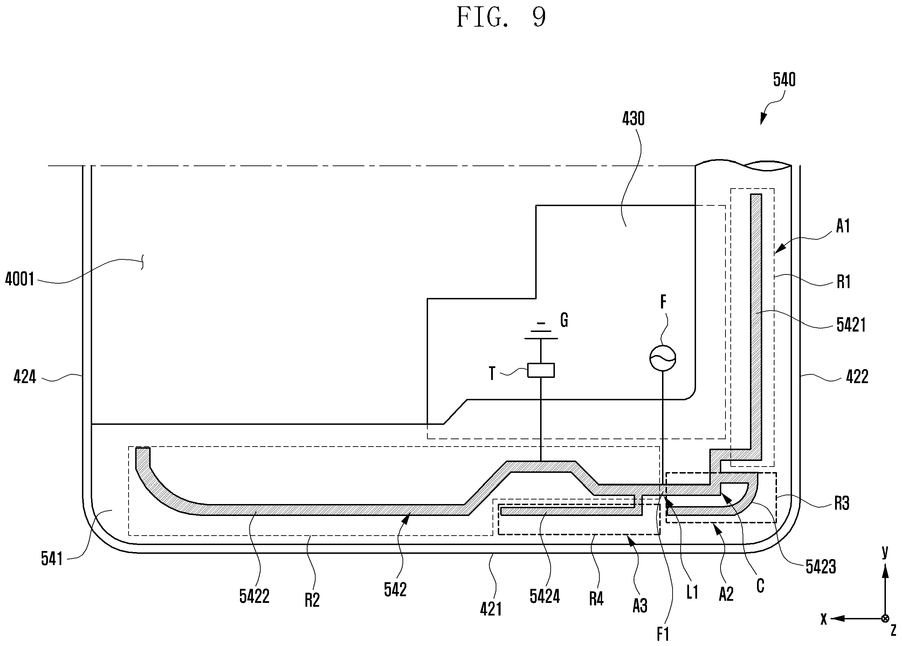

FIG. 9 is a configuration diagram of an antenna according to various embodiments of the disclosure.

The electronic device 540 in FIG. 9 may be similar at least in part to the electronic device 400 in FIG. 5, or may further include other embodiments of the electronic device.

With reference to FIG. 9, the electronic device 540 may include an antenna carrier 541 made of a dielectric material disposed in the internal space 4001, and a conductive pattern 542 disposed in the antenna carrier 541 and used as at least one antenna A1, A2, and A3. In an embodiment, the antenna carrier 541 may be formed as an injection-molded product. In an embodiment, the conductive pattern 542 may include a laser direct structuring (LDS) pattern formed on an outer surface of the antenna carrier 541. In some embodiment, the conductive pattern 542 may include a flexible printed circuit board (FPCB) or a thin metal plate attached to an outer surface of the antenna carrier 541. In some embodiment, the conductive pattern 542 may be embedded at least in part within the interior of the antenna carrier 541 when the antenna carrier 541 is injection-molded.

According to various embodiments, the conductive pattern 542 may include generally a first conductive pattern 5421 formed to have a length in a direction parallel to the second side surface 422 (e.g., in the y-axis direction), and a second conductive pattern 5422 extending perpendicularly from the first conductive pattern 5421 in a direction parallel to the first side surface 421 (e.g., in the x-axis direction). In an embodiment, the conductive pattern 542 may include a third conductive pattern 5423 branched from the first conductive pattern 5421 and formed to have a designated electrical length and shape, and/or a fourth conductive pattern 5424 branched from the second conductive pattern 5422 and formed to have a designated electrical length and shape. In an embodiment, the first conductive pattern 5421, the second conductive pattern 5422, the third conductive pattern 5423, and the fourth conductive pattern 5424 may be formed integrally. In an embodiment, the conductive pattern 542 may include a feeding portion F1 electrically connected to the wireless communication circuit F at a corner C where the first conductive pattern 5421 and the second conductive pattern 5422 substantially meet perpendicularly or at a first point L1 near the corner C. In an embodiment, the feeding portion F1 may be formed at a distance of no more than about 5 mm from the corner C. As shown, the feeding portion F1 is spaced apart from the corner C and positioned on the second conductive pattern 5422, but is not limited thereto. For example, the feeding portion F1 may be disposed at the corner C where the first conductive pattern 5421 and the second conductive pattern 5422 meet or at a designated location of the first conductive pattern 5421 spaced apart from the corner C.

According to various embodiments, the conductive pattern 542 may include a first radiating portion R1 corresponding to the first conductive pattern 5421 based on the feeding portion F1. In an embodiment, the conductive pattern 542 may include a second radiating portion R2 corresponding to a part of the first conductive pattern 5421 and the second conductive pattern 5422. In an embodiment, the first conductive pattern 5421 and the second conductive pattern 5422 may be used as a first antenna A1 that operates with the same phase in a low band because the electrical lengths (e.g., about λ/4) of the first and second radiating portions R1 and R2 are configured equally. In an embodiment, the third conductive pattern 5423 may include a third radiating portion R3 branched from a part of the first conductive pattern 5421 based on the feeding portion F1. In an embodiment, the third conductive pattern 5423 may be used as a second antenna A2 operating in a mid band. In an embodiment, the fourth conductive pattern 5424 may include a fourth radiating portion R4 branched from a part of the second conductive pattern 5422 based on the feeding portion F1. In an embodiment, the fourth conductive pattern 5424 may be used as a third antenna A3 operating in a mid band. In an embodiment, the second antenna A2 and the third antenna A3 may operate in different frequency bands. In some embodiment, the second antenna A2 and the third antenna A3 may operate in substantially the same frequency band. In some embodiment, the second antenna A2 and/or the third antenna A3 may be used as an antenna operating in a high band depending on the configuration of the electrical length of the third radiating portion R3 and/or the fourth radiating portion R4.

The conductive pattern 542 according to an embodiment of the disclosure may be used as a multi-band antenna including the first antenna A1 that uses the first and second conductive patterns 5421 and 5422 formed in a substantially 'L' shape and operates in a first frequency band (e.g., low band) with the same phase, the second antenna A2 that uses the third conductive pattern 5423 and operates in a second frequency band (e.g., mid band), and the third antenna A3 that uses the fourth conductive pattern 5424 and operates in a third frequency band (e.g., mid band).

According to various embodiments, the conductive pattern 542 may include a tunable circuit T (e.g., the tunable circuit T in FIG. 8B) disposed in an electrical path electrically connected to the ground G of the substrate 430 from a part of the second conductive pattern 5422. In an embodiment, the second radiating portion R2 may be induced to operate in a different phase from the first radiating portion R1 via the tunable circuit T. For example, the first radiating portion R1 may be fixed to a designated low band (e.g., about 900 MHz), and the second radiating portion R2 may be shifted to various frequency bands in the low band through the switching operation of the tunable circuit T.

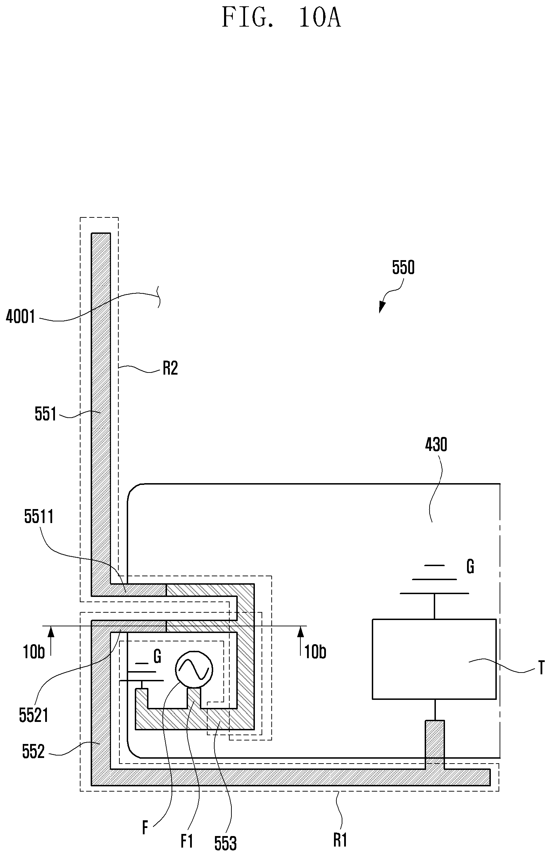

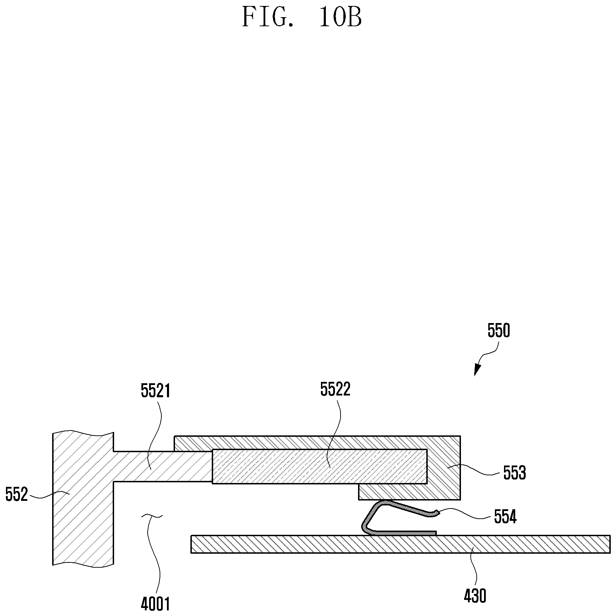

FIG. 10A is a configuration diagram of an antenna according to various embodiments of the disclosure. FIG. 10B is a cross-sectional view of a portion of an antenna viewed along line 10b-10b of FIG. 10A according to various embodiments of the disclosure.

The electronic device 550 in FIGS. 10A and 10B may be similar at least in part to the electronic device 400 in FIG. 5, or may further include other embodiments of the electronic device.

With reference to FIGS. 10A and 10B, the electronic device 550 may include the antenna A using at least one conductive member 551 and 552 as a conductor used as at least a part of a side surface. In an embodiment, the at least one conductive member 551 and 552 may include a first conductive member 551 and a second conductive member 552 spaced apart from the first conductive member 551 and including a portion at least partially bent in a direction perpendicular to the longitudinal direction of the first conductive member 551. In an embodiment, the first conductive member 551 and the second conductive member 552 may be electrically connected through an auxiliary pattern 553 disposed in the internal space 4001 of the electronic device 550. For example, the first conductive member 551 may be electrically connected to the auxiliary pattern 553 through a first conductive extension 5511 extending into the internal space 4001. In an embodiment, the second conductive member 552 may be electrically connected to the auxiliary pattern 553 through a second conductive extension 5521 extending into the internal space 4001. In an embodiment, the auxiliary pattern 553 may be supported by a dielectric injection-molded product 5522 (e.g., an antenna carrier) disposed in the internal space 4001 of the electronic device 550 and may be electrically connected to the substrate 430 through a connecting member 554 (e.g., a C-clip).

According to various embodiments, the auxiliary pattern 553 may include a feeding portion F1 electrically connected to the wireless communication circuit F of the substrate 430 at least at a point. In an embodiment, the antenna A may include a first radiating portion R1 via the second conductive member 552, the second conductive extension 5521, and a portion of the auxiliary pattern 553 from the feeding portion F1. In an embodiment, the antenna A may include a second radiating portion R2 via the first conductive member 551, the first conductive extension 5511, and another portion of the auxiliary pattern 553 from the feeding portion F1. In an embodiment, the first radiating portion R1 and the second radiating portion R2 may be configured to have substantially the same electrical length (e.g., λ/4)*.* In an embodiment, the antenna A may be operated in the low band, with the same phase, through the first and second radiating portions R1 and R2 having substantially the same electrical length. In an embodiment, the antenna A may include a tunable circuit T (e.g., the tunable circuit T in FIG. 8B) disposed in an electrical path electrically connected from the second conductive member 552 to the ground G of the substrate 430.

The antenna A using the auxiliary pattern 553 according to an embodiment of the disclosure may be implemented as the antenna A that operates with the same phase in the low band even if the electrical lengths of the conductive members 551 and 552 are short. This may mean that it can help in miniaturization and/or slimming of the electronic device 550.

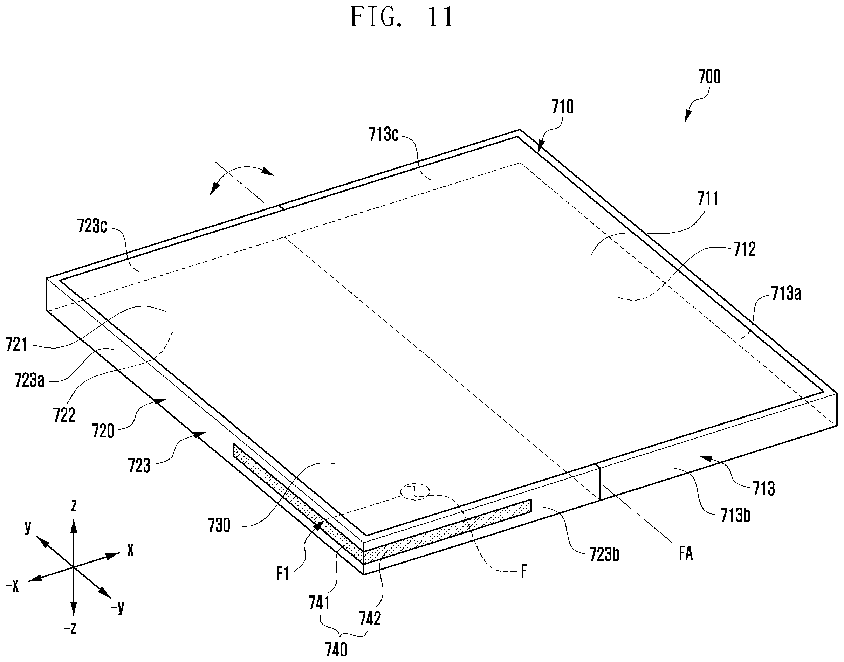

FIG. 11 is a perspective view showing an unfolded state of an electronic device including an antenna according to various embodiments of the disclosure.

The electronic device 700 in FIG. 11 may be similar at least in part to the electronic device 101 in FIG. 1, or may further include other embodiments of the electronic device.

According to an embodiment of the disclosure, the 'L' -shaped antenna A may be applied to the foldable electronic device 700. In the following description, the matching circuit M or the tunable circuit T described above is omitted, but it is apparent to those skilled in the art that it may be applied in the same manner at an appropriate location.

With reference to FIG. 11, the electronic device 700 may include a first housing 710, a second housing 720 foldably connected to the first housing 710 based on a folding axis FA through a hinge device, and a flexible display 730 disposed to be supported by the first housing 710 and the second housing 720. In an embodiment, the first housing 710 may include, in the unfolded state, a first surface 711 facing a first direction (e.g., the z-axis direction), a second surface 712 facing a direction (e.g., the negative z-axis direction) opposite to the first surface 711, and a first lateral member 713 surrounding a space between the first surface 711 and the second surface 712. In an embodiment, the first lateral member 713 may include a first side surface 713a, a second side surface 713b and a third side surface 713c respectively extending in a perpendicular direction from both ends of the first side surface 713a. In an embodiment, the second housing 720 may include, in the unfolded state of the electronic device 700, a third surface 721 facing in the same direction as the first surface 711, a fourth surface 722 facing in the same direction as the second surface 712, and a second lateral member 723 surrounding a space between the third surface 721 and the fourth surface 722. In an embodiment, the second lateral member 723 may include a fourth side surface 723a, a fifth side surface 723b and a sixth side surface 723c respectively extending in a perpendicular direction from both ends of the fourth side surface 723a. In an embodiment, in the unfolded state of the electronic device 700, the second side surface 713b may be connected to the fifth side surface 723b, and the third side surface 713c may be connected to the sixth side surface 723c. In an embodiment, the electronic device 700 may be folded so that the first surface 711 and the third surface 721 face each other (in-folding type). In some embodiment, the electronic device 700 may be folded so that the second surface 712 and the fourth surface 722 face each other (out-folding type).

According to various embodiments, the electronic device 700 may include an antenna A using a conductive pattern 740 as a conductor disposed through a region corresponding to the fourth and fifth side surfaces 723a and 723b of the second housing 720. In an embodiment, the conductive pattern 740 may include a first conductive pattern 741 disposed at a position corresponding to the fourth side surface 723a and a second conductive pattern 742 disposed at a position corresponding to the fifth side surface 723b. In an embodiment, the first conductive pattern 740 may include a feeding portion F1 electrically connected to a wireless communication circuit F (e.g., the wireless communication module 192 in FIG. 1) disposed in an internal space of the electronic device 700. In an embodiment, the antenna A is formed such that the first conductive pattern 741 and the second conductive pattern 742 have substantially the same electrical length (e.g., λ/4) based on the feeding portion F1 connected to the wireless communication circuit F, thereby operating in a low band with the same phase. In some embodiment, the conductive pattern 740 may be disposed in a manner substantially similar to the conductive pattern 542 in FIG. 9. In some embodiment, the conductive pattern 740 may be replaced with the conductive member 425 in FIG. 5. In some embodiment, the conductive pattern 740 may be disposed at a corner where the fourth side surface 723a and the sixth side surface 723c meet, a corner where the first side surface 713a and the second side surface 713b meet, and/or a corner where the first side surface 713a and the third side surface 713c meet.

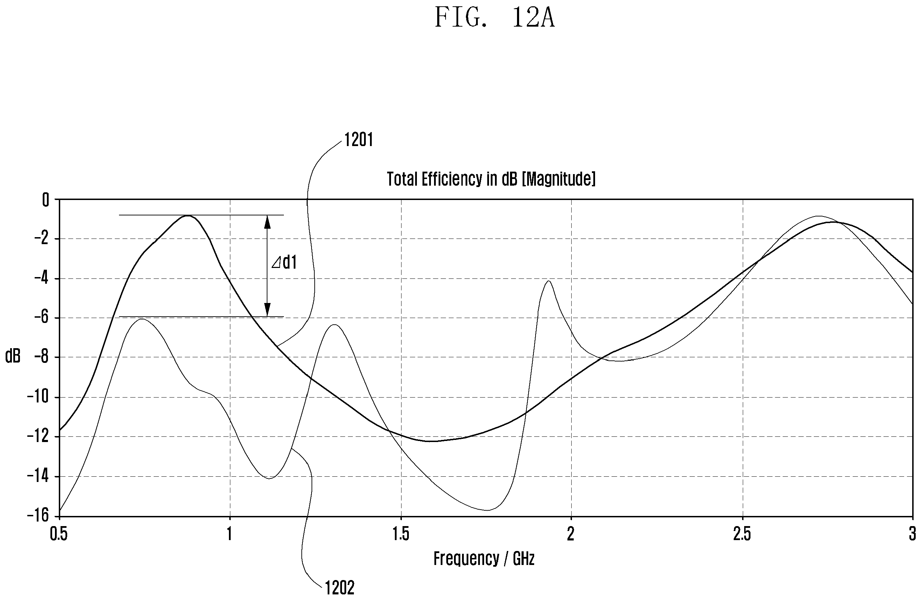

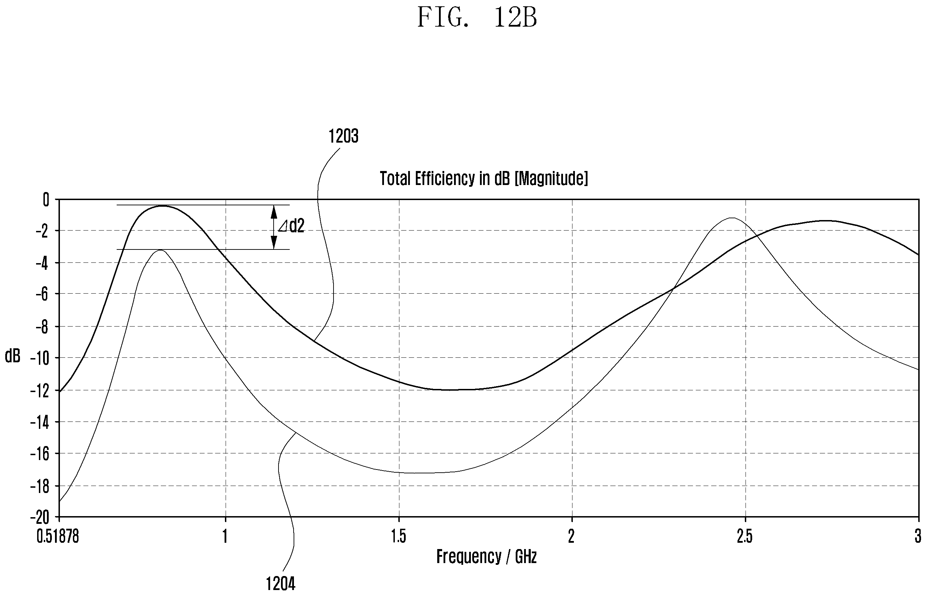

FIG. 12A is a graph showing the radiation performance of an antenna of a comparative example when an electronic device according to various embodiments of the disclosure transitions from an unfolded state to a folded state. FIG. 12B is a graph showing the radiation performance of an antenna when an electronic device according to various embodiments of the disclosure transitions from an unfolded state to a folded state.

With reference to FIG. 12A, when the electronic device 700 transitions from the unfolded state (graph 1201) to the folded state (graph 1202), it can be seen that the antenna in which the first conductive pattern 741 or the second conductive pattern 742 operates alone in the low band has a radiation performance reduction degree (Δd1) of approximately 5 dB.

With reference to FIG. 12B, when the electronic device 700 transitions from the unfolded state (graph 1203) to the folded state (graph 1204), it can be seen that the antenna A according to the embodiment of the disclosure in which the first conductive pattern 741 and the second conductive pattern 742 operate together with the same phase in the low band has a radiation performance reduction degree (Δd2) of approximately 3.5 dB. This may mean that, through the antenna A according to the embodiment of the disclosure in which the first conductive pattern 741 and the second conductive pattern 742 operate together with the same phase, the antenna performance is secured by reducing the degree of reduction in the radiation performance of the antenna due to the folding operation of the foldable electronic device 700.

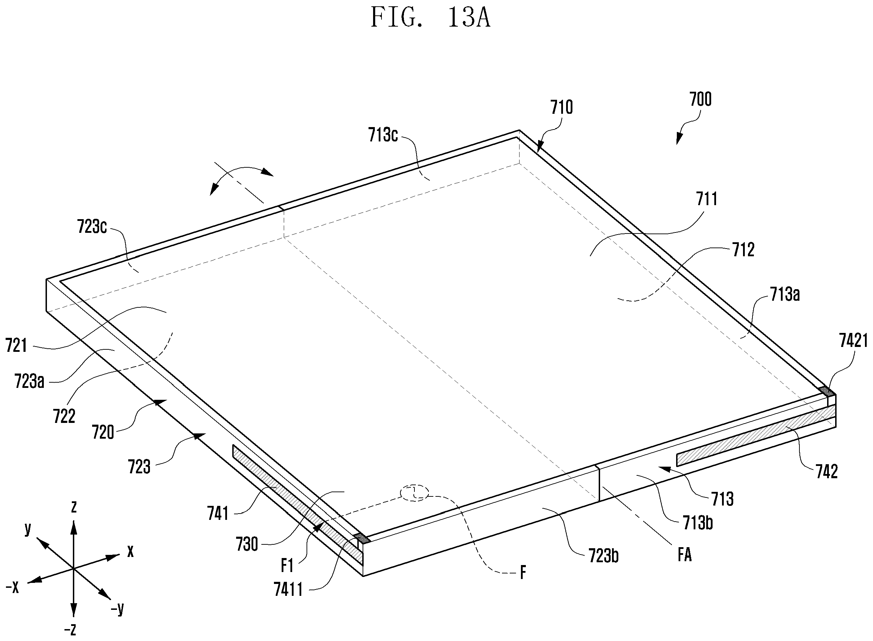

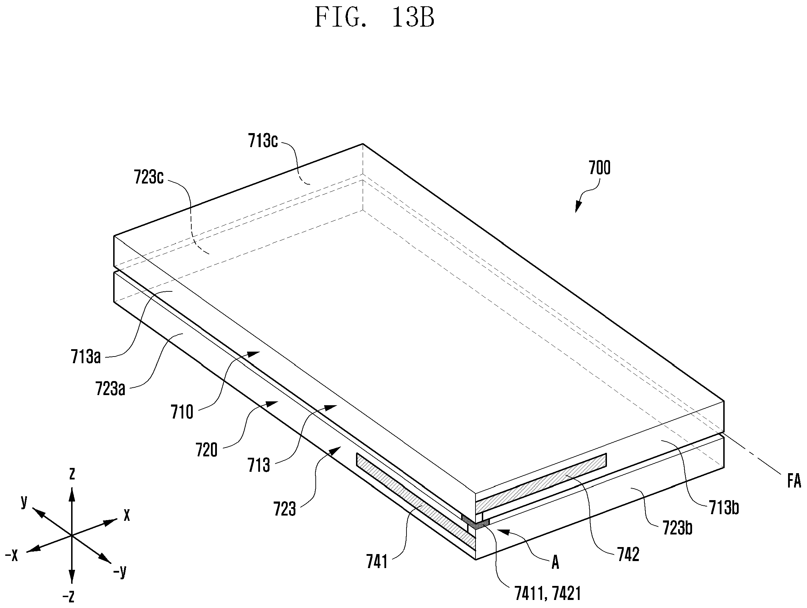

FIG. 13A is a perspective view showing an unfolded state of an electronic device including an antenna according to various embodiments of the disclosure. FIG. 13B is a perspective view showing a folded state of an electronic device including an antenna according to various embodiments of the disclosure.

In describing the electronic device 700 in FIGS. 13A and 13B, the same symbols are given to components that are substantially the same as those of the electronic device 700 in FIG. 11, and a detailed description thereof may be omitted.

With reference to FIGS. 13A and 13B, the electronic device 700 may include a first conductive pattern 741 disposed on the fourth side surface 723a of the second housing 720 and a second conductive pattern 742 disposed on the second side surface 713b of the first housing 710. In an embodiment, the first conductive pattern 741 may be electrically connected to a wireless communication circuit F disposed in the internal space of the electronic device 700. In an embodiment, the second conductive pattern 742 may be used as a dummy pattern that is not operated when the electronic device 700 is in the unfolded state and is electrically connected to the first conductive pattern 741 when the electronic device 700 transitions to the folded state. In an embodiment, the first conductive pattern 741 may operate in a low band when the electronic device 700 is in the unfolded state. In an embodiment, the first and second conductive patterns 741 and 742 may be electrically connected when the electronic device 700 is in the folded state, thereby operating as the 'L' shaped antenna A according to an embodiment of the disclosure. For example, when the electronic device 700 is in the folded state, the antenna A may be configured such that the first and second conductive patterns 741 and 742 have substantially the same electrical length (e.g., λ/4) based on the feeding portion F1, thereby operating with the same phase in a low band. In an embodiment, the electronic device 700 may include a first connection portion 7411 electrically connected to the first conductive pattern 741 and a second connection portion 7421 electrically connected to the second conductive pattern 742. In an embodiment, the first and second connection portions 7411 and 7421 may include connection terminals that are exposed at least in part on an outer surface of the electronic device 700. In an embodiment, when the electronic device 700 is in the folded state, the first and second connection portions 7411 and 7421 may be in physical contact with each other or be in proximity to each other for coupling. In some embodiment, the first conductive pattern 741 and/or the second conductive pattern 742 may be disposed in a manner substantially similar to at least a part of the conductive pattern 542 in FIG. 9. In some embodiment, the first conductive pattern 741 and/or the second conductive pattern 742 may be replaced with at least a part of the conductive member 425 in FIG. 5.

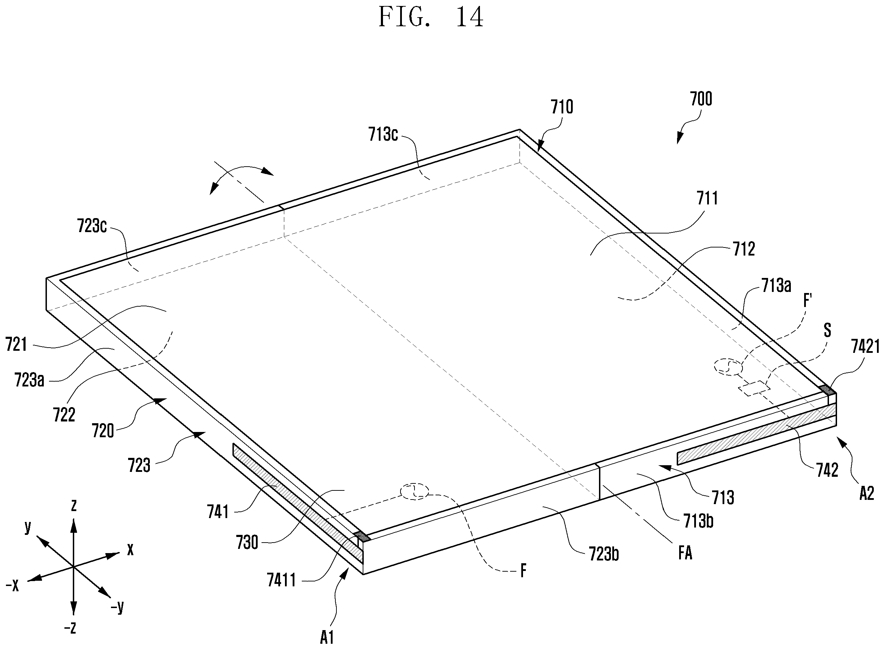

FIG. 14 is a perspective view showing an unfolded state of an electronic device including an antenna according to various embodiments of the disclosure.

In describing the electronic device 700 in FIG. 14, the same symbols are given to components that are substantially the same as those of the electronic device 700 in FIG. 13A, and a detailed description thereof may be omitted.

With reference to FIG. 14, the electronic device 700 may include a first antenna A1 including the first conductive pattern 741 disposed on the fourth side surface 723a of the second housing 720 and a second antenna A2 including the second conductive pattern 742 disposed on the second side surface 713b of the first housing 710. In an embodiment, the first conductive pattern 741 may be electrically connected to the first wireless communication circuit F disposed in the internal space of the second housing 720. In an embodiment, the second conductive pattern 742 may be electrically connected to a second wireless communication circuit F' disposed in the internal space of the first housing 710. In an embodiment, the electronic device 700 may include a switching circuit S disposed in an electrical path electrically connecting the second conductive pattern 742 and the second wireless communication circuit F'. In an embodiment, the first wireless communication circuit F and the second wireless communication circuit F' may be substantially the same. In an embodiment, the processor (e.g., the processor 120 in FIG. 1) of the electronic device 700 may control the switching circuit S in the unfolded state so that the first antenna A1 and the second antenna A2 operate independently. In an embodiment, the operating frequency band of the first antenna A1 and the operating frequency band of the second antenna A2 may be substantially the same or different from each other. In an embodiment, when the electronic device 100 is in the folded state, the processor (e.g., the processor 120 in FIG. 1) of the electronic device 700 may control the switching circuit S so that the second conductive pattern 742 is used as a dummy pattern for the first conductive pattern 741. For example, when the electronic device 700 is in the folded state, the second conductive pattern 742 may be electrically disconnected from the second wireless communication circuit F' through the switching circuit S. Through the control of the switching circuit S, when the electronic device 700 is in the folded state, the first and second conductive patterns 741 and 742 are configured to have substantially the same electrical length (λ/4) based on the feeding point where the first wireless communication circuit F is connected to the first conductive pattern 741, thereby being utilized as a single antenna that operates in a low band with the same phase.

According to various embodiments, an electronic device (e.g., the electronic device 400 in FIG. 5) may include at least one housing (e.g., the housing 410 in FIG. 4) including a first side surface (e.g., the first side surface 421 in FIG. 5) and a second side surface (e.g., the second side surface 422 in FIG. 5) extending from the first side surface in a perpendicular direction; a conductor (e.g., the conductor 425 in FIG. 5) disposed in the housing and extends along the second side surface from the first side surface; a substrate (e.g., the substrate 430 in FIG. 5) including a ground plane (e.g., the ground G in FIG. 5) disposed in an internal space of the housing; and a wireless communication circuit (e.g., the wireless communication circuit F in FIG. 5) disposed on the substrate and configured to transmit or receive a wireless signal in a first frequency band through a first point (e.g., the first point L1 in FIG. 5) of the conductor, wherein the first point may be located at or adjacent to a corner (the corner C in FIG. 5) of the conductor, and in the conductor, a first length (the first electrical length EL1 in FIG. 5) of a first radiating portion (e.g., the first radiating portion R1 in FIG. 5) located at one side from the first point may be equal to a second length (e.g., the second electrical length EL2 in FIG. 5) of a second radiating portion (e.g., the second radiating portion R2 in FIG. 5) disposed at other side, based on the first frequency band.

According to various embodiments, the electrical length may be λ/4.

According to various embodiments, the first point may be disposed at a position not exceeding 5 mm from the corner of the conductor.

According to various embodiments, the first frequency band may include a low band.

According to various embodiments, a tunable circuit (e.g., the tunable circuit T in FIG. 8A) disposed in an electrical path connecting a distal end of the second radiating portion and the ground plane (e.g., the ground plane 531 in FIG. 8A) may be included.

According to various embodiments, a space between the second radiating portion and the ground plane may be configured as an antenna (e.g., the loop antenna LA in FIG. 8A) that operates in a second frequency band through the tunable circuit.

According to various embodiments, the second frequency band may include a mid band.

According to various embodiments, the tunable circuit may include a switching circuit (e.g., the switching circuit S in FIG. 8B) and a plurality of inductors (e.g., the inductors L in FIG. 8B) whose inductance values are varied through a switching operation of the switching circuit.

According to various embodiments, the at least one housing may include a conductive lateral member (e.g., the lateral member 420 in FIG. 5) including the first and second side surfaces, and the conductor may include at least one conductive member (425) segmented from the conductive lateral member through at least one segmenting portion (e.g., the first segmenting portion 4211 and the second segmenting portion 4221 in FIG. 5).

According to various embodiments, the conductor may include a conductive pattern (e.g., the conductive pattern 553 in FIG. 10A) that is electrically connected to the at least one conductive member (e.g., the first conductive member 551 and the second conductive member 552 in FIG. 10A) and disposed to be supported by a dielectric injection-molded product (e.g., the dielectric injection-molded product 5522 in FIG. 10A) in the internal space of the at least one housing.

According to various embodiments, an antenna carrier (e.g., the dielectric carrier 541 in FIG. 9) disposed in the internal space of the housing may be included, and the conductor may include a conductive pattern (e.g., the conductive pattern 542 in FIG. 9) disposed on the antenna carrier.

According to various embodiments, the conductive pattern may include a first conductive pattern (e.g., the first conductive pattern 5421 in FIG. 9) disposed to correspond to the first radiating portion, and a second conductive pattern (e.g., the second conductive pattern 5422 in FIG. 9) extending from the first conductive pattern and disposed to correspond to the second radiating portion.

According to various embodiments, a third conductive pattern (e.g., the third conductive pattern 5423 in FIG. 9) branched from the first conductive pattern and a fourth conductive pattern (e.g., the fourth conductive pattern 5424 in FIG. 9) branched from the second conductive pattern may be included, and the wireless communication circuit may be configured to transmit or receive a wireless signal in a second frequency band through the third conductive pattern and/or the fourth conductive pattern.

According to various embodiments, the conductive pattern may include at least one of a laser direct structuring(LDS) pattern formed on the antenna carrier, or a flexible printed circuit board (FPCB) or a conductive plate attached to an outer surface of the antenna carrier.

According to various embodiments, the at least one housing may include a first housing (e.g., the first housing 710 in FIG. 11) and a second housing (e.g., the second housing 720 in FIG. 11) foldably connected to the first housing via a hinge device, and the conductor may be disposed in the first housing and/or the second housing.

According to various embodiments, the first housing and/or the second housing may include a conductive lateral member including the first side surface and the second side surface, and the conductor may include at least one conductive member segmented from the conductive lateral member through at least one segmenting portion.

According to various embodiments, the conductor may include a conductive pattern electrically connected to the at least one conductive member and disposed to be supported by a dielectric injection-molded product in an internal space of the first housing and/or the second housing.

According to various embodiments, an antenna carrier disposed in the internal space of the first housing and/or the second housing may be included, and the conductor may include at least one conductive pattern disposed on the antenna carrier.

According to various embodiments, the at least one conductive pattern may include a first conductive pattern (e.g., the first conductive pattern 741 in FIG. 13) disposed in one of the first housing or the second housing and electrically connected to the wireless communication circuit, and a second conductive pattern (e.g., the second conductive pattern 742 in FIG. 13) disposed in the other of the first housing or the second housing, and when the electronic device is in a folded state, the first conductive pattern and the second conductive pattern may be electrically connected to have the same electrical length based on the first point.

According to various embodiments, the first conductive pattern and the second conductive pattern may be connected in an 'L' shape when the electronic device is in the folded state.

Meanwhile, the embodiments disclosed in the specification and drawings are only presented as specific examples to easily explain the technical contents of the disclosure and help the understanding of the disclosure, and it is not intended to limit the scope of the disclosure. Accordingly, it should be interpreted that all changes or modifications derived from the subject matter of the disclosure are included in the scope of various embodiments of the disclosure.

## Claims

1. An electronic device (400) comprising:
at least one housing (410) including a first side surface (421) and a second side surface (422) extending from the first side surface in a perpendicular direction;
a conductor (425) disposed in the housing and extends along the second side surface from the first side surface;
a substrate (430) including a ground plane (G) disposed in an internal space of the housing; and
a wireless communication circuit (F) disposed on the substrate and configured to transmit or receive a wireless signal in a first frequency band through a first point (L1) of the conductor,
wherein the first point is located at or adjacent to a corner (C) of the conductor, and
in the conductor, a first length (EL1) of a first radiating portion (R1) located at one side from the first point is equal to a second length (EL2) of a second radiating portion (R2) disposed at other side, based on the first frequency band.

2. The electronic device of claim 1, wherein the first length is λ/4*.*

3. The electronic device of claim 1 or 2, wherein the first point is disposed at a position not exceeding 5 mm from the corner of the conductor.

4. The electronic device of any one of claims 1 to 3, wherein the first frequency band includes a low band.

5. The electronic device of any one of claims 1 to 4, comprising:
a tunable circuit (T) disposed in an electrical path connecting a distal end of the second radiating portion and the ground plane (531).

6. The electronic device of claim 5, wherein a space between the second radiating portion and the ground plane is configured as an antenna (LA) that operates in a second frequency band through the tunable circuit.

7. The electronic device of claim 6, wherein the second frequency band includes a mid band.

8. The electronic device of any one of claims 5 to 7, wherein the tunable circuit includes:
a switching circuit (S); and
a plurality of inductors (L) whose inductance values are varied through a switching operation of the switching circuit.

9. The electronic device of any one of claims 1 to 8, wherein the at least one housing includes a conductive lateral member (420) including the first and second side surfaces, and
the conductor includes at least one conductive member (425) segmented from the conductive lateral member through at least one segmenting portion (4211, 4221).

10. The electronic device of claim 9, wherein the conductor includes a conductive pattern (553) that is electrically connected to the at least one conductive member (551, 552) and disposed to be supported by a dielectric injection-molded product (5522) in the internal space of the at least one housing.

11. The electronic device of any one of claims 1 to 8, comprising:
an antenna carrier (541) disposed in the internal space of the housing,
wherein the conductor includes a conductive pattern (542) disposed on the antenna carrier.

12. The electronic device of claim 11, wherein the conductive pattern includes:
a first conductive pattern (5421) disposed to correspond to the first radiating portion; and
a second conductive pattern (5422) extending from the first conductive pattern and disposed to correspond to the second radiating portion.

13. The electronic device of claim 12, comprising:
a third conductive pattern (5423) branched from the first conductive pattern; and
a fourth conductive pattern (5424) branched from the second conductive pattern,
wherein the wireless communication circuit is configured to transmit or receive a wireless signal in a second frequency band through the third conductive pattern and/or the fourth conductive pattern.

14. The electronic device of any one of claims 11 to 13, wherein the conductive pattern includes at least one of a laser direct structuring(LDS) pattern formed on the antenna carrier, or a flexible printed circuit board (FPCB) or a conductive plate attached to an outer surface of the antenna carrier.

15. **16.** The electronic device of claim 1, wherein the at least one housing includes:
a first housing (710); and
a second housing (720) foldably connected to the first housing via a hinge device, and
the conductor is disposed in the first housing and/or the second housing.
